# EUROPEAN PATENT SPECIFICATION

(11) **EP 1 503 940 B1**
(45) Date of publication and mention of the grant of the patent: **02.09.2009**
(21) Application number: 03723500.9
(22) Date of filing: 04.04.2003
(51) Int. Cl.: B65D 5/74

(54) **CONTAINER FOR A FLOWING PRODUCT AND METHOD FOR MANUFACTURING AND FILLING SUCH A CONTAINER**
BEHÄLTER FÜR EIN FLÜSSIGES PRODUKT UND VERFAHREN ZUR HERSTELLUNG UND BEFÜLLEN DES BEHÄLTERS
RECIPIENT POUR PRODUITS FLUIDES ; PROCEDE DE FABRICATION ET METHODE DE REMPLISSAGE

(30) Priority: 05.04.2002 WO PCT/NL02/00229
(43) Date of publication of application: 09.02.2005
(73) Proprietor: Shikoku Kakoki Co., Ltd., Itano-gun Tokushima 771-0287 (JP)
(72) Inventor: Hooft, Corstiaan Johannes, 8442 KZ Heerenveen (NL); Leijten, Martinus Francisus Johannes Cornelis, 3544 SG Utrecht (NL); Verburgh, Yves Luc René, 2870 Puurs (BE); Iwano, Fumiyuki, Itano-gun, Tokushima 771-1220 (JP); Ueda, Shigeru, Tokushima City, Tokushima 770-0814 (JP)
(74) Representative: Bot, David Simon Maria
(86) International application number: PCT/NL2003/000258
(87) International publication number: WO 2003/086881

(56) References cited:
- US-A- 4 471 882
- US-A- 4 527 699
- US-A- 5 088 642
- US-B1- 6 185 906

## Description

The invention relates to a container for a flowing product according to the preamble of claim 1. This container comprises a tubular base element with multiple side walls with a bottom and an open end at the upper side, folded from a blank having scored folding lines forming the corners of the base element, manufactured from a plastic coated carrier material, in which the plastic coating is at least situated on the inside of the base element. The container further comprises a pre-formed top element with an open underside, substantially made of plastic, which top element is sealingly attached to the upper side of the base element, which is also provided with a dispensing opening with a closure means, and which over its circumference at the underside has fusion welding walls, corresponding to the inner circumference of the upper side of the base element, which fusion welding walls have a free lower edge which is situated on the inside of the base element. Preferably, the container is used for liquids, suitable for human consumption, such as dairy products.

The invention further relates to the manufacturing and filling of such a container.

US5088642 describes a container for liquids, which comprises a body and a spout. The body takes the form of a folding box and is made from a heat-sealable multilayer composite material. The head portion of the body is funnel-shaped through the formation of folding pockets. The head portion has a central opening into which a mouthpiece of the spout is inserted. The mouthpiece has a conical flange sealed to the inside of the funnel-shaped head portion. The shape of the flange is adapted to the shape of the inside of the funnel-shaped head portion having the folds and folding pockets so that a positive connection is formed, in addition to the sealing connection between the flange and the head portion.

EP 0 108 166 A1 describes a container for liquids which comprises a tubular main body, open on both ends, which is made by folding a blank of plastic coated carrier material, provided with an intermediate metal foil layer. A mouth portion made of plastic is fitted to the top of the main body and joined to the inner surface wall thereof, for example by means of high-frequency heat sealing. The mouth portion thus forms the top element of this container. It is provided with a dispensing opening that can be closed using closure means such as a screw cap. A plastic bottom portion is fitted to the other end of the main body container.

Like the mouth portion, it is joined to the inner surface of the main body for example by means of high-frequency heat sealing. Although it is not mentioned in the document, high frequency induction heat sealing would also be a suitable joining method for both the connections mentioned above.

The container according to EP 0 108 166 A1 has several drawbacks. First, in practice it appears to be very difficult to obtain a liquid tight container in accordance with EP 0 108 166. Especially at the sharp corners of the container it has proven difficult to obtain a reliable liquid tight connection between the main body and the mouth portion or bottom portion.

Furthermore, there is the presence of the metal foil in the body material. From an environmental point of view the presence of such a metal foil is undesirable, since it complicates the environmentally sensible discarding of used containers.

Also, the container as described in EP 0 108 166 has a depression around at the top of the main body. Liquids, such as water from condensation or liquids from the contents of the container due to leakage or spilling, collect in this depression on the top of the container. This is an undesired situation for reasons of hygiene.

It is the aim of the present invention to provide an improved container for a flowing product.

The invention provides a container for a flowing product as claimed in claim 1. This container comprises a tubular base element with four side walls with a bottom and an open end at the upper side, folded from a blank having scored folding lines forming the corners of the base element, manufactured from a plastic coated carrier material, in which the plastic coating is at least situated on the inside of the base element. The container further comprises a pre-formed top element, which is sealingly attached to the upper side of the base element with an open underside, which top element is substantially made of plastic, which is provided with a dispensing opening with a closure means, and which over its circumference at the underside has fusion welding walls, corresponding to the inner circumference of the upper side of the base element, which fusion welding walls have a free lower edge which is situated on the inside of the base element. The material of the base element consists of layers of plastic and paper-like material. The connection between the top element and the base element is an ultrasonic weld. The fusion welding walls of the top element are provided with one or more welding ribs extending around the entire outer circumference of the fusion welding walls, which after welding connect the top element to the base element by sealingly closing the gap between the top element and the base element.

The base element of container according to the invention is a tubular sleeve having multiple walls, folded from a blank of plastic coated carrier material. In order to facilitate folding, the folding lines are scored. In order to close the upper side of the base element, a pre-formed plastic top of the type described before is sealingly connected to the base element by means of ultrasonic welding. The bottom of the container can be realised by means of folding the base element or by fixing a separate bottom element to the base element, in ways as known per se.

In order to obtain a liquid tight seal between the top element and the base element, special measures are proposed. The top element is provided with fusion welding walls, which are provided with one or more welding ribs. These welding ribs extend around the entire outer circumference of the fusion welding walls. These welding ribs accommodate a volume of plastic that is large enough to flowingly fill the space between the top element and the base element - even at the sharp corners - upon ultrasonic welding. This way, the plastic of the ribs can sealingly close the gap between the top element and the base element, and a reliable liquid tight seal is obtained.

In a preferred embodiment, the top element is provided with two or more welding ribs, which welding ribs extend around the circumference of the top element. It has proven beneficial if these welding ribs are of different height, relative to the fusion welding walls. By making the rib closest to the bottom end of the top element the highest, and the rib closest to the top of the top element the lowest, the liquid tight sealing of the container is improved.

A base element obtained by folding of a blank from sheet material usually comprises a longitudinal seam. In the area of the seam, the base element in general has an increased wall thickness. According to the invention, the fusion welding walls of the top element are provided with a local notch, present at the location corresponding to the area of the base element with increased wall thickness. The dimensions of such a local notch also correspond to the dimensions of the area with increased wall thickness, so the notch can accommodate the thicker area of the base element. In case of multiple thicker areas in the base element, preferably multiple notches are present in the top element.

It has been proven beneficial to provide the notch with a rounded surface instead of with a flat surface. This again improves the liquid tight sealing of the top element to the base element.

Preferably, the top element is provided with an outwardly protruding covering rim, that after connecting the top element to the base element shields the upper edge of the base element while leaving the outside of the base element free.

The top element is manufactured substantially from plastic, preferably by injection moulding or blow moulding. This allows a high degree of freedom of design. The shape and colour of the top element can be varied, and a dispensing opening can be manufactured integrally with the top element. Since the top element is manufactured as a separate part, an easy and quick change over can be made to a different shape or colour of the top element in the process of manufacturing and filling the containers. So, the present invention provides flexibility in both design and production.

The base element can also have a variety of shapes. Since it is now possible to have a reliable liquid tight seal in containers in which the base element has sharply folded corners, the base element can simply be folded to a sleeve with a rectangular cross section, constant in shape and size over its heigth in a way as known per se. But other shapes are also possible, for example a base element in which the upper portion thereof has the shape of a topped pyramid. It is also possible that the base element has one or more wall parts that extend above the connection between base element and top element. Those parts can be adhered to the top element.

The invention also provides a method for manufacturing and filling of a container as claimed in claim 16. The method according to the invention comprises the following steps:
- the top element is manufactured,
- the closing means is attached to the dispensing opening of the top element in such a way that the dispensing opening is closed by the closing means,
- the base element is manufactured, in which the bottom is left open,
- the top element and the base element are brought together, and positioned relative to each other,
- the ultrasonic weld between the top element and the base element is formed by ultrasonic welding means, on which the counter pressure required at the inside of the top element is provided by counter pressure means introduced via the open bottom into the assembly of the top element and the base element,
- the counter pressure means is removed from the inside of the assembly of the top element and the base element,
- assembly of the top element and the base element is thus positioned that the top element is located at a lower level than the open bottom of the base element,
- the container is filled through the open bottom of the base element,
- the container is closed by the closing of the bottom; the container is now filled and closed.

Preferably, the top element is closed by means of applying a screw cap.

The method according to the invention is used for manufacturing containers with a topped pyramid shape. This method comprises the following steps:
- folding a sleeve with a substantially square cross section from a carton blank, such that the sleeve comprises:
   - a lower portion, which will form the body of the container,
   - and an upper portion which will become part of the pyramidal top of the container,
   - an open end at the bottom,
   - and an open end at the top,
- partly pushing the sleeve over a mandrel, the mandrel comprising:
   - a body with a square cross section,
   - and a top having the shape of a topped pyramid,
   - the shape of the mandrel being adapted to the shape of the container to be manufactured,
      the sleeve being pushed over the mandrel, such that the top part of the mandrel remains out of the upper portion of the sleeve,
- inserting a pre-breaking anvil in the sleeve, entering the sleeve through its open top end, which pre-breaking anvil is provided with a pocket at each of its four corners,
- folding the four corners of the upper portion of the sleeve inwardly, such that they are accommodated in the pockets of the anvil,
- retracting the pre-breaking anvil from the sleeve, making the pre-breaking anvil leave the sleeve at its open top end,
- pushing the sleeve further over the mandrel, such that the top part of the mandrel is inside the upper portion of the sleeve, and preferably such that the mandrel and the sleeve are relatively positioned in such a way that the transition between the body and the top of the mandrel adjoins the transition between the upper portion and the lower portion of the sleeve,
- inserting a prefabricated top element in the sleeve, entering the sleeve from the open top end, the dispensing opening of the top element being closed,
- folding the corners of the upper portion of the sleeve in the direction substantially parallel to the walls of the sleeve, preferably in such a way that the folded parts of the sleeve are located on the inside of the sleeve,
- sealing the walls of the sleeve to the top element by means of ultrasonic or high frequency sealing,
- removing the assembly of the top element and the sleeve from the mandrel, the sleeve now constituting the base element of the container,
- positioning the assembly of the top element and the base element in such a way that the top element is located at a lower level than the open bottom of the base element,
- filling the container through the open bottom of the base element,
- closing the container by the closing of the bottom; the container is now filled and closed.

It will be apparent to the man skilled in the art that pushing the mandrel over the sleeve can be effected by keeping the mandrel stationary and pushing the sleeve over the mandrel but also by keeping the sleeve stationary and inserting the mandrel into the sleeve, or by a combination of movements of both sleeve and mandrel.

A possible embodiment of a container according to the invention will be described in detail below, with reference to the drawing.

The drawing shows in:
Fig. 1: a container according to the invention, partly in cross section,
Fig. 2: a blank for folding the base element,
Fig. 3: a vertical cross section of a first top element,
Fig. 4: a top view of the first top element, partly in horizontal cross section,
Fig. 5: a side view of the fusion welding walls of the first top element, partly enlarged,
Fig. 6: a vertical cross section of the first top element, connected to the upper part of the base element,
Fig. 7: a vertical cross section of an optimised top element,
Fig. 8: a top view of the optimised top element, partly in horizontal cross section,
Fig. 9: a side view of the fusion welding walls of the optimised top element, partly enlarged,
Fig. 10: a diagrammatic overview of a first method for manufacturing and filling containers according to the invention,
Fig. 11: a diagrammatic overview of a second method for manufacturing and filling containers in accordance with fig. 1,

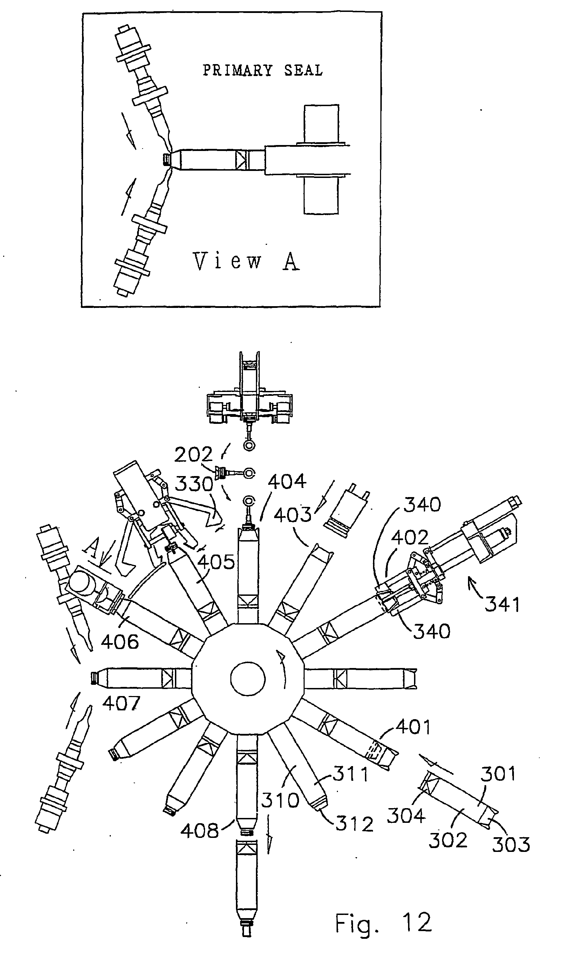

Fig. 12: an enlarged diagrammatic overview of a second method for manufacturing,
Fig. 13: the insertion of the pre-breaking anvil
Fig. 14: the prefolding of the corners of the upper portion of the sleeve while the pre-breaking anvil is inserted
Fig. 15: the final folding of the corners of the upper portion of the sleeve

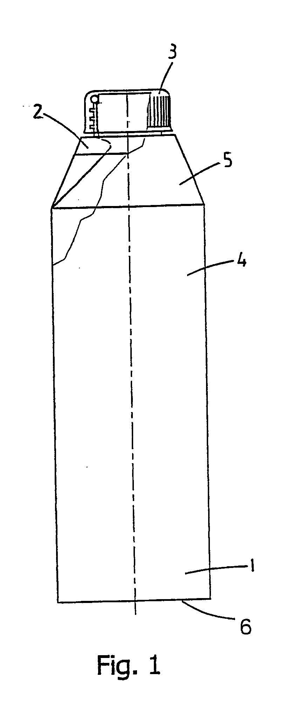

Figure 1 shows a container according to the invention, with a base element 1, a top element 2, closing means 3 (preferably provided with temper evident means) and bottom 6. In the described embodiment, the base element has a lower portion 4 with a square horizontal cross section of substantially constant dimensions over its length and an upper portion 5 with the shape of a topped pyramid.

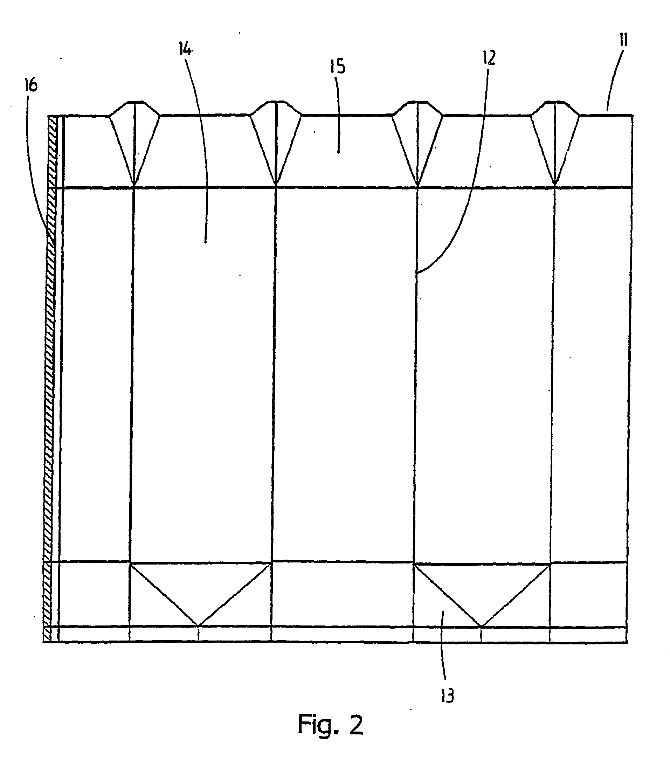

Figure 2 shows the blank 11 from which the base element is folded. The folding lines 12 are scored to facilitate folding. In the described embodiment, the bottom of the container is obtained by folding part 13 of the blank 11 and sealing it afterwards. After folding, portion 14 will form the lower part of the base element and portion 15 will be form upper part. Seal area 16 will form the longitudinal seal in a side wall of the base element 1.

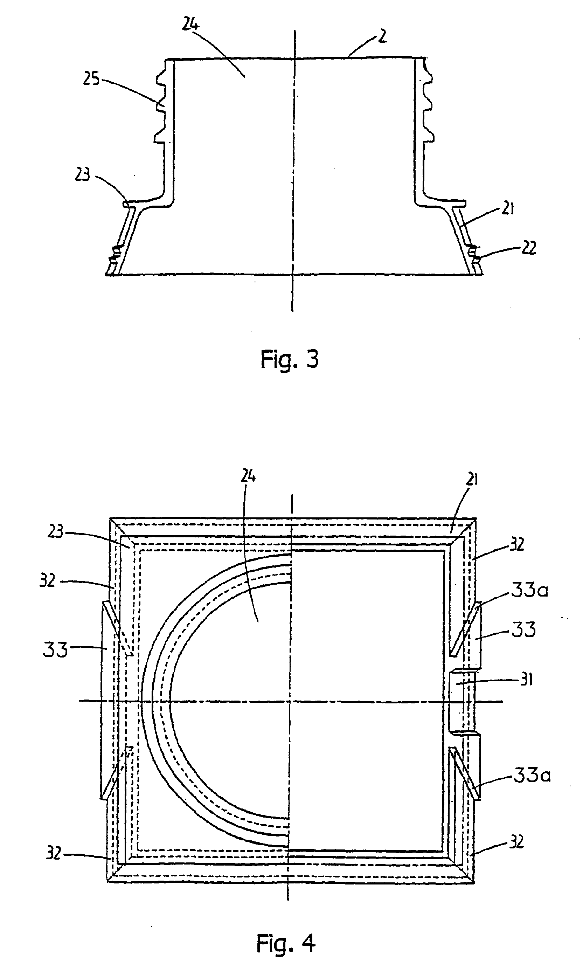

Figure 3 shows a vertical cross section of the top element 2. In the manufacturing process, the fusion welding walls 21 are connected to the inside circumference of the upper part 5 of the base element 1. On the fusion welding walls, ribs 22 are present around the entire circumference. These ribs 22 focus the energy of the ultrasonic welding process. During the welding, the plastic of the ribs softens and adheres to the inner plastic layer of the base element. According to the invention, the ribs 22 accommodate a volume of plastic that is large enough to flowingly fill the space between the top element 2 and the base element 1 upon welding. This is especially important near the sharp corners of the base element 1.

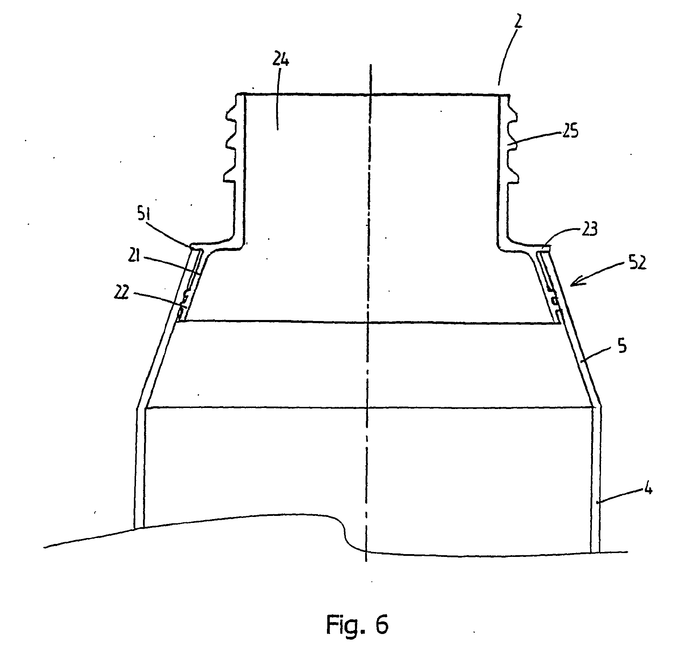

Figure 6 shows a vertical cross section of the top element 2 connected to the upper part 5 of the base element 1.

In the embodiment of figures 3-6, the top element 2 is provided with a covering rim 23, that after connecting the top element 2 to the base element 1 shields the upper edge 51 of the base element 1 while leaving the outside 52 of the base element 1 free.

The dispensing opening 24 is formed integrally with the top element 2. On the outside, it is provided with screw thread 25 to accommodate a screw cap as closing means 3.

Figure 4 shows a top view of the top element 2, partly in horizontal cross section.

On two diametrically opposed sides the top element 2 is provided with outwardly projecting relief parts 33. These relief parts 33 are arranged centrally on the corresponding wall and have a topped triangular shape in vertical elevational view broadening towards the lower end of the top element. The sides of the topped triangular relief parts are delimited by inclined transition faces 33a which adjoin the remainder of the fusion welding wall 21.

In one of the relief parts 33 a local notch 31 is provided. The base element 1 here has a longitudinal seam in the centre of one of the side walls.

The dimensions of the local notch 31 also correspond to the dimensions of the area with increased wall thickness 33, so the notch 31 can accommodate the thicker area of the base element 1. In the described embodiment, thicker areas are also present near the corners of the upper part 5 of the base element 1, due to its topped pyramidal shape. To accommodate these areas, additional notches 32 have been provided.

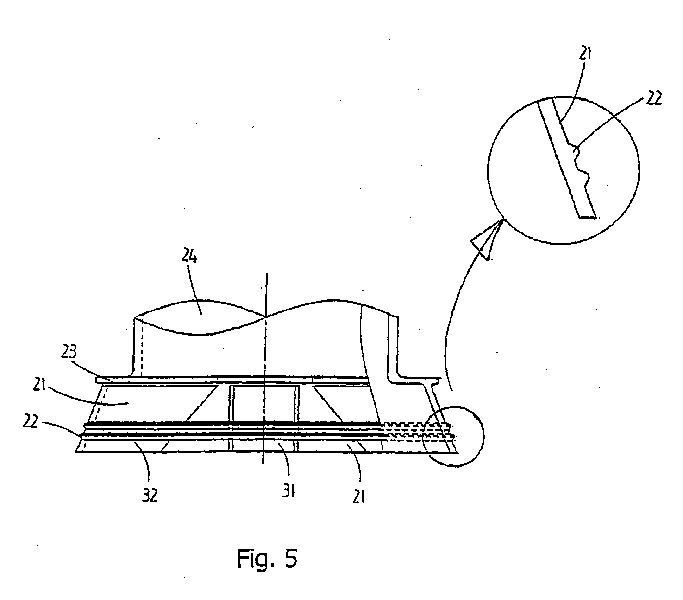

Figure 5 shows the fusion welding walls 21, the ribs 22 and the notches 31 and 32 in more detail.

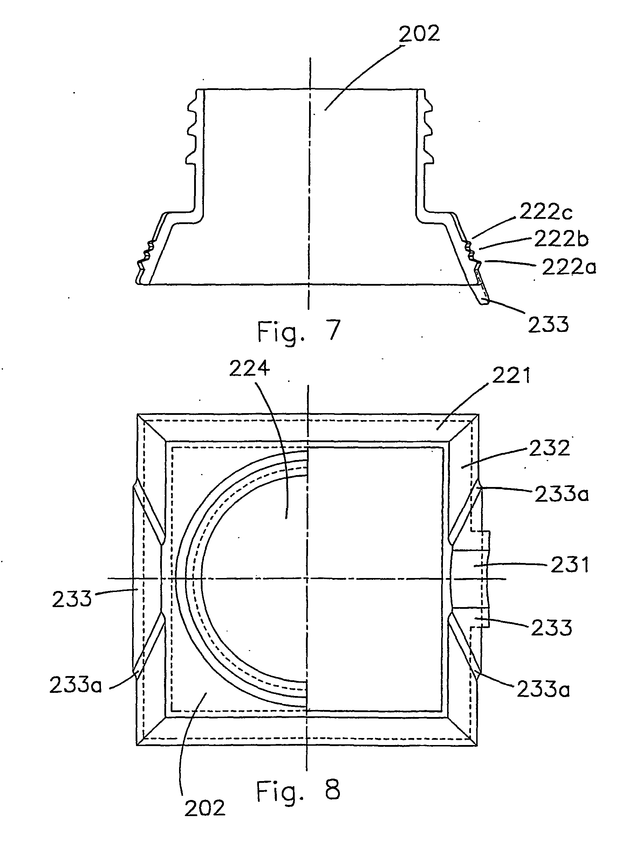

Figures 7, 8 and 9 show an optimised embodiment of top element 202. This optimised top element 202 comprises three welding ribs 222a,b,c. These welding ribs extend around the entire circumference of the fusion welding walls 221. The lower welding rib 222a is higher than the other welding ribs 222b,c. It has been shown that this particular configuration improves the liquid tight sealing of the top element to the base element.

As in top element 2, top element 202 is provided with notches 232 and 231. These notches are designed to accommodate thicker parts of the base element 1, which originate from folding or from the welded longitudinal seam of the base element. Notches 232 are the same as notches 32. Notch 231 is used to accommodate the longitudinal seam of the base element, and is different in shape from notch 31 of top element 2.

Notch 231 has - when regarded in horizontal projection - an inwardly curved surface; the centre lying further inward than the outer ends of the surface; and has a relatively large radius. This curved shape of the notch 231 has been proven beneficial over the shape of notch 31 in obtaining a liquid tight seal.

When comparing figures 4 and 8 another difference is the shape of relief parts 233. In figure 4 the transition faces 33a are at right angles to the fusion welding wall 21, whereas in figure 8 the transition faces 233a are inclined, resulting a a trapeziod shape of the relief part 233 when considered in horizontal cross section. This trapezoid shape also contributes to a better sealing.

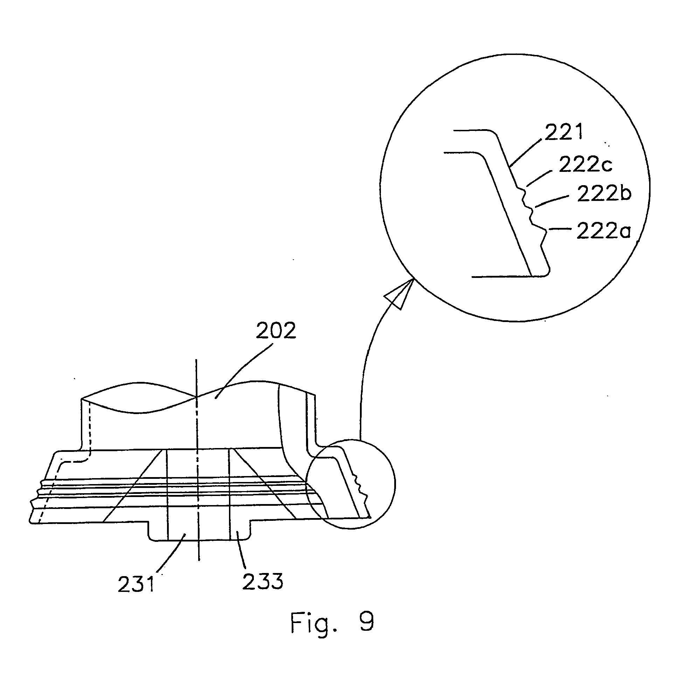

Also in figures 7 and 9 it can been seen that the relief part 233 including the notch 231 for receiving the longitudinal seam in the base part projects downward beyond the lower edge of the other fusion welding walls 221. This also contributes to a better sealing.

In different embodiments (not shown) the part of the top element protruding above the base element can have substantially the shape of a longitudinally divided into halves, horizontally extending cylinder with semicircular side walls, substantially the shape of a topped pyramid, substantially the shape of a half sphere or substantially the shape of a topped cone.

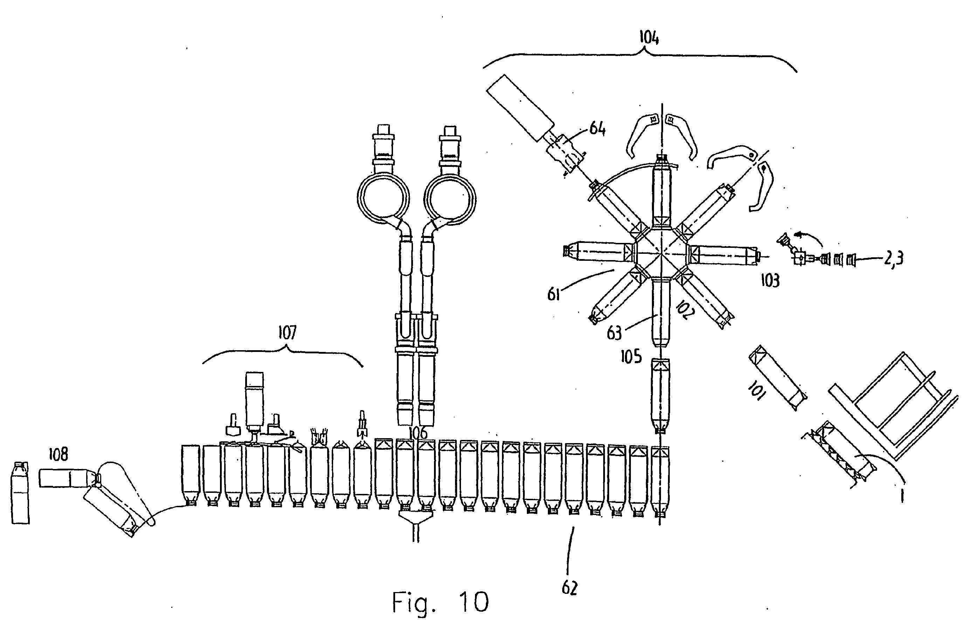

Figure 10 shows a diagrammatic overview of a first embodiment of the method for manufacturing and filling containers according to the invention.

First (not shown) the top element 2 is manufactured, and the closing means 3 is attached to the dispensing opening 24 of the top element 2 in such a way that the dispensing opening 24 is closed by the closing means 3, which is preferably provided with tamper evident means.

Separately, the base element 1 is manufactured, in which the bottom is left open (not shown).

In position 101 of figure 7, the base element 1 is transferred to the welding station 61. The base element 1 is then put on an anvil 63 in the welding station 61 (position 102).

At position 103, the top element 2 is transferred to the welding station 61. The top element 2 and the base element 1 are brought together, and positioned relative to each other.

At position 104, the ultrasonic weld between the top element and the base element 1 is formed by ultrasonic welding means 64. The counter pressure required at the inside of the top element 2 is provided by the anvil 63, acting as counter pressure means, inside of the assembly of the top element 2 and the base element 1.

At position 105, the anvil 63 is removed from the inside of the assembly of the top element 2 and the base element 1. The assembly of the top element 2 and the base element 1 is then positioned in such a way that the top element 2 is located at a lower level than the open bottom of the base element 1. The assembly is then transferred to the filling line 62.

At position 106, the container is filled through the open bottom of the base element 1.

At position 107, the container is closed by the folding the bottom part of the base element into the bottom 6 of the container and sealing it in that way.

At position 108, the now filled container is returned to an upright position.

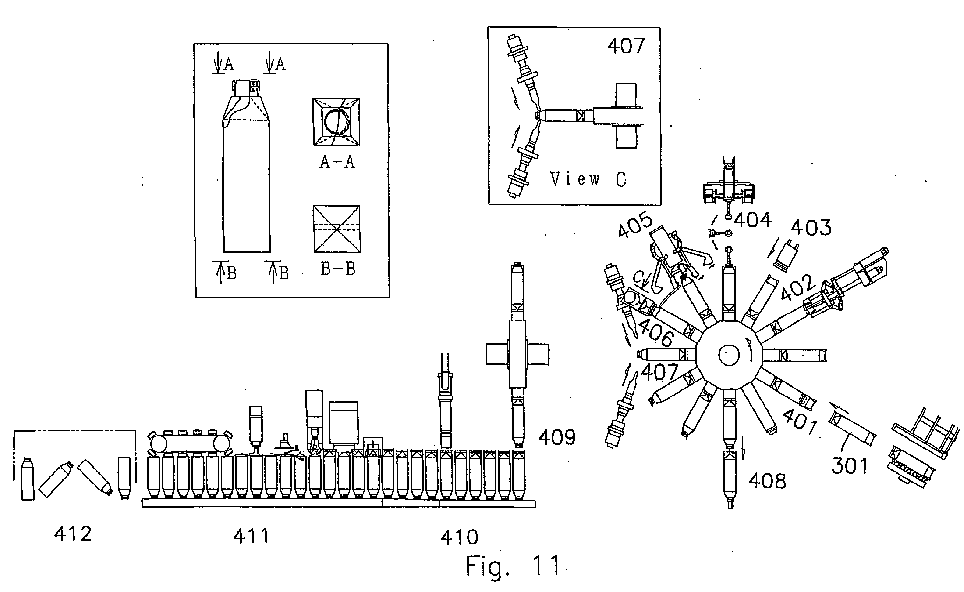

A second embodiment of the method according to the invention is particularly suitable for manufacturing and filling of containers in accordance with fig. 1. This method is illustrated in fig. 11 and further.

As in the first method, first (not shown) the top element 202 is manufactured, and the closing means 3 (see fig. 1) is attached to the dispensing opening 224 (see fig. 8) of the top element 202 in such a way that the dispensing opening 224 is closed by the closing means 3, which is preferably provided with tamper evident means.

A blank as shown in fig. 2 is folded to form a sleeve 301 with a square cross section. Bottom and top of sleeve 301 remain open. Sleeve 301 comprises a lower portion 302, which will form the body of the container, an upper portion 303, which will become part of the pyramidal top of the container and a bottom portion 304 which will become the bottom of the container. The cross section of the lower portion 302 of the sleeve 301 is substantially of the same dimensions over that portion 302.

The sleeve 301 is positioned onto mandrel 310. Mandrel 310 comprises a body 311 and a top 312. Body 311 has a square cross section with substantially constant dimensions over its length, while the top 312 has a the shape of a topped pyramid. The shape of the mandrel is adapted to the shape and dimensions of the container to be manufactured.

In position 401, the sleeve is put on the mandrel in such a way that the top 312 of the mandrel remains below the upper portion 303 of the sleeve 301; the mandrel 310 is only partly inside the sleeve 301.

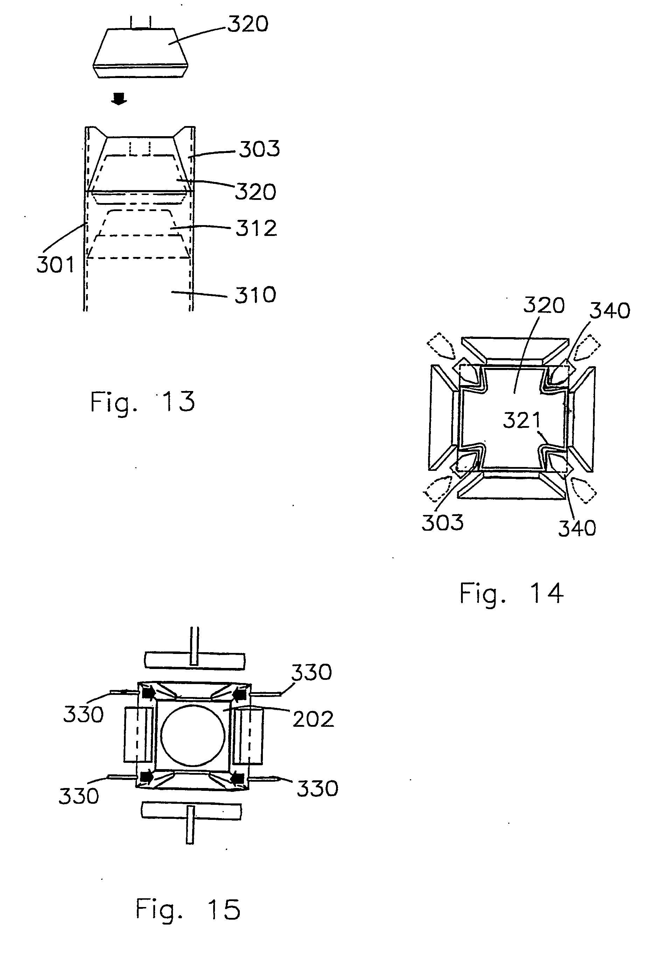

In position 402, a pre-breaking anvil 320 (see fig. 13, 14) is inserted in the sleeve 301, from the open end of the upper portion 303. This anvil 320 is provided with pockets 321 at its four corners (see fig. 14). The four corners of the upper portion 303 of the sleeve 301 are folded inwardly by fingers 340 of a folding device 341. The pockets 321 of the anvil 320 are arranged to accommodate the folded parts of the upper portion 303 of the sleeve 301. Fig. 14 shows that the walls of the upper portion 303 are folded inward too.

The pre-breaking anvil 320 is then retracted from the sleeve 301. It leaves the sleeve by the open end of the upper portion 303.

At position 403 the sleeve 301 is pushed further onto the mandrel 310. The top 312 of the mandrel 310 is now inside the upper portion 303 of the sleeve 301. Preferably, mandrel 310 and sleeve 301 are relatively positioned in such a way that the transition between the body 311 and the top 312 of the mandrel 310 adjoins the transition between the upper portion 303 and the lower portion 302 of the sleeve 301.

At position 404, the top element 202 is inserted in the upper portion 303 of the sleeve 301. The folded corners are pushed outwards a little by the pre-breaking anvil during its retraction from the sleeve. The top element 202 can thus be inserted without obstructions being in the way. The dispensing opening 224 is closed off, preferably with a screw cap, before the top element 202 is inserted in the sleeve 301.

At position 405, fingers 330 fold the corners of the upper portion 303 of the sleeve 301 in the direction of the walls of the sleeve 301. Preferably, the folded areas 305 are located on the inside of the sleeve 301. This action results in a smooth outer surface of the container. The processing step of position 405 is also shown in fig. 15.

At positions 406 and 407, side walls of the upper portion 303 of the sleeve 301 are pushed and held against the fusion welding walls of the top element 202. The walls of the upper part 303 of the sleeve 301 are sealed to the top element 202 by means of ultrasonic welding. The walls are sealed by two at the same time; the walls being sealed lying on opposite sides.

Then, the assembly of the sleeve 301 (which now constitutes the base element of the container) and the top element 202 is removed from the mandrel 310 at position 408. It is then transferred to the start of the filling line at 409.

At position 410, the container is filled through the open bottom of the base element.

At position 411, the container is closed by the folding the bottom part of the base element into the bottom of the container and sealing it in that way.

At position 412, the now filled container is returned to an upright position.

## Claims

1. Container for a flowing product, comprising
a base element (1):
- with four side walls (14, 15) with a bottom (6) and an open end at the upper side,
- folded from a blank (11) having scored folding lines (12) forming the corners of the base element (1),
- manufactured from a plastic coated carrier material,
- in which the plastic coating is at least situated on the inside of the base element (1),
and a pre-formed top element (2, 202) with an open underside:
- which is sealingly attached to the upper side of the base element (1),
- which is substantially made of plastic,
- which is provided with a dispensing opening (24, 224) with a closure means (3),
- and which over its circumference at the underside has fusion welding walls (21, 221), corresponding to the inner circumference of the upper side of the base element (1), which fusion welding walls (21, 221) have a free lower edge which is situated on the inside of the base element (1),
wherein
- the material of the base element (1) consists of layers of plastic and paper-like material,
- the fusion welding walls (21, 221) of the top element (2, 202) are provided with one or more welding ribs (22, 222a, 222b, 222c) extending around the entire outer circumference of the fusion welding walls (21, 221), which after welding connect the top element (2, 202) to the base element (1) by closing the gap between the top element (2, 202) and the base element (1) in a liquid tight manner,
- the connection between the top element (2, 202) and the base element (1) is formed by welding means
- the upper portion (5) of the base element (1) has the shape of a topped pyramid,
- the base element (1) has a longitudinal seam,
- in the fusion welding walls (21, 221) of the top element (2, 202) a local notch (31, 231) is present at the location of the longitudinal seam, in such a way that the fusion welding walls (21, 221) adjoin the side walls (15) of the base element (1) along the entire inner circumference thereof, and
- an additional notch (32, 232) is provided on the welding walls (21, 221) of the top element (2, 202) to accommodate thicker parts adjacent to the corners at the upper portion (5) of the base element (1),
**characterized in that**
- the welding means are ultrasonic,
- the topped pyramid shape of the upper portion (5) of the base element (1) has a square cross-section.

2. Container according to claim 1, **characterized in that**, the top element (2, 202) comprises at least two outwardly projecting welding ribs (22, 222a, 222b, 222c), projecting outward over a height with respect to the fusion welding walls (21, 221), of which welding ribs (22, 222a, 222b, 222c) one welding rib is higher relative to the fusion welding walls (21, 221) than the other rib or ribs.

3. Container according to claim 2, **characterized in that**, the higher rib (222a) is located closest to the bottom of the top element (2, 202).

4. Container according to at least one of the preceding claims, **characterized in that**, the local notch (231) has a curved surface.

5. Container according to at least one of the preceding claims, **characterized in that** right above the base element (1) an outwardly protruding covering rim (23) is present in the top element (2), that shields the upper edge (51) of the base element (1) while leaving the outside of the base element (1) free.

6. Container according to at least one of the preceding claims, **characterized in that** the top element (2, 202) is manufactured integral with the dispensing opening (24, 224).

7. Container according to at least one of the preceding claims, **characterized in that** the top element (2, 202) is transparent.

8. Container according to at least one of the preceding claims, **characterized in that** the closing means is a screw cap (3).

9. Container according to at least one of the preceding claims, **characterized in that** the closing means (3) is provided with a tamper evident means, visible from the outside.

10. Container according to at least one of the preceding claims, **characterized in that** the bottom (6) is obtained by folding the base element (1).

11. Container according to at least one of the claims 1 to 9, **characterized in that** the bottom (6) is manufactured as a separate part.

12. Container according to at least one of the preceding claims, **characterized in that** the part of the top element (2, 202) protruding above the base element (1) has substantially the shape of a longitudinally divided into halves, horizontally extending cylinder with semicircular side walls.

13. Container according to at least one of the claims 1 to 11 **characterized in that** the part of the top element (2, 202) protruding above the base element (1) has substantially the shape of a topped pyramid.

14. Container according to at least one of the claims 1 to 11 **characterized in that** the part of the top element (2, 202) protruding above the base element (1) has substantially the shape of a half sphere.

15. Container according to at least one of the claims 1 to 11 **characterized in that** the part of the top element (2, 202) protruding above the base element (1) has substantially the shape of a topped cone.

16. Method for the manufacturing and filling of a container that comprises the following steps:
- folding a sleeve (301) with a substantially square cross section from a carton blank, such that the sleeve (301) comprises:
- a lower portion, which will form the body of the container,
- and an upper portion (5) which will become part of the pyramidal top of the container,
- an open end at the bottom,
- and an open end at the top,
- partly pushing the sleeve (301) over the mandrel (310), the mandrel (301) comprising:
- a body with a square cross section,
- and a top having the shape of a topped pyramid,
- the shape of the mandrel (310) being adapted to the shape of the container to be manufactured,
the sleeve (301) being pushed over the mandrel (310) such that the top part of the mandrel (310) remains out of the upper portion of the sleeve (301),
- inserting a pre-breaking anvil in the sleeve (301), entering the sleeve (301) through its open top end, which pre-breaking anvil is provided with a pocket at each of its four corners,
- folding the four corners of the upper portion of the sleeve (301) inwardly, such that they are accommodated in the pockets of the anvil,
- retracting the pre-breaking anvil from the sleeve (301), making the pre-breaking anvil leave the sleeve (301) at its open top end,
- pushing the sleeve (301) further over the mandrel (310), such that the top part of the mandrel (310) is inside the upper portion of the sleeve (301), and preferably such that the mandrel (310) and the sleeve (301) are relatively positioned in such a way that the transition between the body and the top of the mandrel (310) adjoins the transition between the upper portion and the lower portion of the sleeve (301),
- inserting a prefabricated top element (2, 202) in the sleeve (301), entering the sleeve (301) from the open top end, the dispensing opening (24,224) of the top element (2, 202) being closed,
- folding the corners of the upper portion of the sleeve (301) in the direction substantially parallel to the walls of the sleeve (301), preferably in such a way that the folded parts of the sleeve (301) are located on the inside of the sleeve (301),
- sealing the walls of the sleeve (301) to the top element (2, 202) by means of ultrasonic sealing,
- removing the assembly of the top element (2, 202) and the sleeve (301) from the mandrel (310), the sleeve (301) now constituting the base element (1) of the container,
- positioning the assembly of the top element (2, 202) and the base element (1) is in such a way that the top element (2, 202) is located at a lower level than the open bottom of the base element (1),
- filling the container through the open bottom of the base element (1),
- closing the container by the closing of the bottom (6); the container is now filled and closed.

17. Method according to claim 16 **characterized in that** the top element (2, 202) is closed by means of applying a screw cap (3).

18. Method according to at least one of the claims 16 or 17 **characterized in that** the bottom is closed by folding and subsequent connection of parts of the base element (1).

19. Method according to at least one of the claims 16 or 17 **characterized in that** the bottom is closed by means of applying a bottom element.

20. Method according to at least one of the claims 16 to 19 **characterized in that** the top element (2, 202) is manufactured by means of injection moulding.

21. Method according to at least one of the claims 16 to 19 **characterized in that** the top element (2, 202) is manufactured by means of blow forming.

22. Method according to at least one of the claims 16-21, wherein the container is configured according to at least one of the claims 1-15.

## Patentansprüche

1. Behälter für ein fliessendes Produkt, umfassend:
ein Grundelement (1):
- mit vier Seitenwänden (14, 15), mit einem Boden (6) und einem offenen Ende an der Oberseite,
- gefaltet aus einem Rohling (11), angeritzte Faltlinien (12) aufweisend, die die Ecken des Grundelements (1) bilden,
- gefertigt aus einem kunststoffbeschichteten Trägermaterial,
- wobei sich die Kunststoffbeschichtung zumindest auf der Innenseite des Grundelements (1) befindet,
und ein vorgeformtes Deckelelement (2, 202) mit einer offenen Unterseite:
- welches dichtend an der Oberseite des Grundelements (1) befestigt ist,
- welches im Wesentlichen aus Kunststoff gefertigt ist,
- welches mit einer Ausgabeöffnung (24, 224) mit einem Verschlussmittel (3) versehen ist,
- und welches Schmelzschweißwände (21, 221) an seinem Umfang an der Unterseite aufweist, die dem inneren Umfang der Oberseite des Grundelements (1) entsprechen, wobei die Schmelzschweißwände (21, 221) eine freie untere Kante aufweisen, die sich an der Innenseite des Grundelements (1) befindet,
wobei
- das Material des Grundelements (1) sich aus Schichten aus Kunststoff oder papierartigem Material besteht,
- die Schmelzschweißwände (21, 221) des Deckelelements (2, 202) mit einer oder mehreren Schweißrippen (22, 222a, 222b, 222c) versehen sind, die sich um den gesamten äußeren Umfang der Schmelzschweißwände (21, 221) erstrecken, die nach dem Schweißen das Deckelelement (2, 202) mit dem Grundelement (1) verbinden, indem der Spalt zwischen dem Deckelelement (2, 202) und dem Grundelement (1) flüssigkeitsdicht geschlossen wird,
- die Verbindung zwischen dem Deckelelement (2, 202) und dem Grundelement (1) von den Schweißmitteln gebildet wird,
- der obere Abschnitt (5) des Grundelements (1) die Form einer gekappten Pyramide hat,
- das Grundelement (1) eine longitudinale Naht hat,
- in den Schmelzschweißwänden (21, 221) des Deckelelements (2, 202) eine lokale Aussparung (31, 231) an der Stelle der longitudinalen Naht in einer Weise vorhanden ist, dass die Schmelzschweißwände (21, 221) an den Seitenwänden (15) des Grundelements (1) entlang seines gesamten inneren Umfangs angrenzen, und
- eine zusätzliche Aussparung (32, 232) an den Schweißwänden (21, 221) an dem Deckelelement (2, 202) vorgesehen ist, um dickere Teile, benachbart zu den Ecken des oberen Abschnitts (5) des Grundelements (1), aufzunehmen,
**dadurch gekennzeichnet, dass**
- es sich um Ultraschall-Schweißmittel handelt,
- die gekappte Pyramidenform des oberen Abschnitts (5) des Grundelements (1) einen rechteckigen Querschnitt aufweist.

2. Behälter gemäß Anspruch 1, **dadurch gekennzeichnet, dass** das Deckelelement (2, 202) mindestens zwei nach außen vorstehende Schweißrippen (22, 222a, 222b, 222c) aufweist, die nach außen über eine Höhe bezogen auf die Schmelzschweißwände (21, 221) hinaus vorstehen, wobei eine Schweißrippe der Schweißrippen (22, 222a, 222b, 222c) höher ist relativ zu den Schmelzschweißwänden (21, 221) als die andere Rippe oder Rippen.

3. Behälter gemäß Anspruch 2, **dadurch gekennzeichnet, dass** die höhere Rippe (222a) am nähesten zu dem Boden des Deckelelements (2, 202) gelegen ist.

4. Behälter gemäß mindestens einem der vorgehenden Ansprüche, **dadurch gekennzeichnet, dass** die lokale Aussparung (231) eine gekrümmte Oberfläche aufweist.

5. Behälter gemäß mindestens einem der vorhergehenden Ansprüche, **dadurch gekennzeichnet, dass** direkt oberhalb des Grundelements (1) ein nach außen vorstehender überdeckender Rand (23) in dem Deckelelement (2) vorhanden ist, der die obere Kante (51) des Grundelements (1) schützt, während die Außenseite des Grundelements (1) frei bleibt.

6. Behälter gemäß mindestens einem der vorhergehenden Ansprüche, **dadurch gekennzeichnet, dass** das Deckelelement (2, 202) integral mit der Ausgabeöffnung (24, 224) gefertigt ist.

7. Behälter gemäß mindestens einem der vorhergehenden Ansprüche, **dadurch gekennzeichnet, dass** das Deckelelement (2, 202) transparent ist.

8. Behälter gemäß mindestens einem der vorhergehenden Ansprüche, **dadurch gekennzeichnet, dass** das Verschlussmittel eine Schraubkappe (3) ist.

9. Behälter gemäß mindestens einem der vorhergehenden Ansprüche, **dadurch gekennzeichnet, dass** das Verschlussmittel (3) mit einem Sicherheitsverpackungsmittel versehen ist, welches von außen sichtbar ist.

10. Behälter gemäß mindestens einem der vorhergehenden Ansprüche, **dadurch gekennzeichnet, dass** der Boden (6) durch Falten des Grundelements (1) erhalten wird.

11. Behälter gemäß mindestens einem der Ansprüche 1 bis 9, **dadurch gekennzeichnet, dass** der Boden (6) als ein separates Teil gefertigt wird.

12. Behälter gemäß mindestens einem der vorhergehenden Ansprüche, **dadurch gekennzeichnet, dass** der Teil des Deckelelements (2, 202), der über das Grundelement (1) übersteht, im Wesentlichen die Form aufweist von einem in Längsrichtung in Hälften geteilten, sich horizontal erstreckenden Zylinder mit halbkreisförmigen Seitenwänden.

13. Behälter gemäß mindestens einem der Ansprüche 1 bis 11, **dadurch gekennzeichnet, dass** der Teil des Deckelelements (2, 202), der über das Grundelement (1) übersteht, im Wesentlichen die Form einer gekappten Pyramide hat.

14. Behälter gemäß mindestens einem der Ansprüche 1 bis 11, **dadurch gekennzeichnet, dass** der Teil des Deckelelements (2, 202), der über das Grundelement (1) übersteht, im Wesentlichen die Form einer Halbkugel hat.

15. Behälter gemäß mindestens einem der Ansprüche 1 bis 11, **dadurch gekennzeichnet, dass** der Teil des Deckelelements (2, 202), der über das Grundelement (1) übersteht, im Wesentlichen die Form eines gekappten Kegels aufweist.

16. Verfahren zur Herstellung und Befüllung eines Behälters, das folgende Schritte umfasst:
- Falten einer Hülse (301) mit einem im Wesentlichen rechteckigen Querschnitt aus einem Kartonrohling, wobei die Hülse (301) umfasst:
- einen unteren Abschnitt, der den Körper des Behälters formen wird,
- und einen oberen Abschnitt (5), der Teil des pyramidenförmigen oberen Endes des Behälters werden wird,
- ein offenes Ende an dem Boden
- und ein offenes Ende an dem oberen Ende,
- teilweise Stülpen der Hülse (301) über den Dom (310), wobei der Dom (310) umfasst:
- einen Körper mit einem rechteckigen Querschnitt,
- und ein oberes Ende in der Form einer gekappten Pyramide,
- die Form des Doms (310) ist an die Form des herzustellenden Behälters angepasst,
- die Hülse (301) wird über den Dom (310) derart gestülpt, dass der obere Abschnitt des Doms (310) außerhalb des oberen Abschnitts der Hülse (301) verbleibt,
- Einführen eines Vorbruchgegenhalters in die Hülse (301), welcher in die Hülse (301) durch dessen oberes Ende eintritt, wobei der Vorbruchgegenhalter mit einer Tasche an jeder Seite an jeder seiner vier Ecken versehen ist,
- Falten der vier Ecken des oberen Endes der Hülse (301) nach innen, so dass diese in den Taschen des Gegenhalters aufgenommen sind,
- Rückziehen des Vorbruchgegenhalters von der Hülse (301), so dass der Vorbruchgegenhalter die Hülse (301) an ihrem oberen offenen Ende verlässt,
- Stülpen der Hülse (301) weiter über den Dom (310), so dass der obere Abschnitt des Doms (310) innerhalb des oberen Abschnitts der Hülse (301) ist und vorzugsweise derart, dass der Dorn (310) und die Hülse (301) so relativ zueinander positioniert sind, dass der Übergang zwischen dem Körper und dem oberen Ende des Doms (310) an dem Übergang zwischen oberem Abschnitt und unterem Abschnitt der Hülse (301) anliegt,
- Einführen eines vorgefertigten Deckelelements (2, 202) in die Hülse (301), welches in die Hülse (301) vom offenen oberen Ende eintritt, wobei die Ausgabeöffnung (24, 224) des Deckelelements (2, 202) geschlossen ist,
- Falten der Ecken des oberen Abschnitts der Hülse (301) in der Richtung im Wesentlichen parallel zu den Wänden der Hülse (301), vorzugsweise derart, dass sich die gefalteten Abschnitte der Hülse (301) in dem Inneren der Hülse (301) befinden,
- Verschweißen der Wände der Hülse (301) mit dem Deckelelement (2, 202) mittels Ultraschallschweißens,
- Entfernen der Anordnung aus dem Deckelelement (2, 202) und der Hülse (301) von dem Dom (310), wobei die Hülse (301) nun das Grundelement (1) des Behälters darstellt,
- Positionieren der Anordnung aus dem Deckelelement (2, 202) und dem Grundelement (1) derart, dass das Deckelelement (2, 202) in einer tieferen Ebene als der offene Boden des Grundelements (1) lokalisiert ist,
- Befüllen des Behälters über dem offenen Boden des Grundelements (1),
- Schließen des Behälters, indem der Boden (6) geschlossen wird; der Behälter ist nun befüllt und geschlossen.

17. Verfahren gemäß Anspruch 16, **dadurch gekennzeichnet, dass** das Deckelelement (2,202) geschlossen wird mittels der Verwendung einer Schraubkappe (3).

18. Verfahren gemäß mindestens einem der Ansprüche 16 oder 17, **dadurch gekennzeichnet, dass** der Boden durch Falten und anschließendes Verbinden der Abschnitte des Grundelements (1) geschlossen wird.

19. Verfahren gemäß mindestens einem der Ansprüche 16 oder 17, **dadurch gekennzeichnet, dass** der Boden durch Anbringen eines Bodenelements geschlossen wird.

20. Verfahren gemäß mindestens einem der Ansprüche 16 bis 19, **dadurch gekennzeichnet, dass** das Deckelelement (2, 202) durch Spritzgießen hergestellt ist.

21. Verfahren gemäß mindestens einem der Ansprüche 16 bis 19, **dadurch gekennzeichnet, dass** das Deckelelement (2, 202) durch Blasformen hergestellt ist.

22. Verfahren gemäß mindestens einem der Ansprüche 16 bis 21, wobei der Behälter gemäß einem der Ansprüche 1 bis 15 ausgebildet ist.

## Revendications

1. Récipient pour produits fluides, comprenant
un élément de base (1) :
- doté de quatre parois latérales (14, 15) ayant un fond (6) et une extrémité ouverte du côté supérieur ;
- plié à partir d'une découpe (11) présentant des lignes de pliure marquées (12) qui forment les coins de l'élément de base (1) ;
- fabriqué dans un matériau revêtu de plastique ;
- le revêtement plastique se trouvant au moins à l'intérieur de l'élément de base (1) ;
et un élément haut préformé (2, 202) ayant un côté inférieur ouvert :
- qui est fixé de manière étanche au côté supérieur de l'élément de base (1) ;
- qui est essentiellement constitué de plastique ;
- qui est muni d'une ouverture de distribution (24, 224) dotée d'un moyen de fermeture (3) ;
- et qui présente, sur la circonférence du côté inférieur, des parois de soudage par fusion (21, 221) correspondant à la circonférence interne du côté supérieur de l'élément de base (1), ces parois de soudage par fusion (21, 221) ayant un bord inférieur libre placé à l'intérieur de l'élément de base (1) ;
dans lequel :
- le matériau de l'élément de base (1) se compose de couches de plastique et d'un matériau de type papier ;
- les parois de soudage par fusion (21, 221) de l'élément haut (2, 202) sont munies d'une ou plusieurs nervures de soudage (22, 222a, 222b, 222c) qui s'étirent sur toute la circonférence externe des parois de soudage par fusion (21, 221) et qui, après soudage, assemblent l'élément haut (2, 202) à l'élément de base (1) en fermant et en étanchéifiant aux liquides l'intervalle entre l'élément haut (2, 202) et l'élément de base (1) ;
- l'assemblage entre l'élément haut (2, 202) et l'élément de base (1) est réalisé par un moyen de soudage ;
- la partie supérieure (5) de l'élément de base (1) présente la forme d'une pyramide étêtée ;
- l'élément de base (1) possède une ligne de soudure longitudinale ;
- les parois de soudage par fusion (21, 221) de l'élément haut (2, 202) comportent une encoche locale (31, 231) au niveau de la ligne de soudure longitudinale, de sorte qu'elles rejoignent les parois latérales (15) de l'élément de base (1) sur toute la circonférence interne de celui-ci, et
- une encoche supplémentaire (32, 232) est prévue sur les parois de soudage (21, 221) de l'élément haut (2, 202) pour loger des pièces épaisses adjacentes aux coins, en partie supérieure (5) de l'élément de base (1) ;
**caractérisé en ce que** :
- le moyen de soudage est ultrasonique ;
- la pyramide étêtée de la partie supérieure (5) de l'élément de base (1) présente une section transversale de forme carrée.

2. Récipient selon la revendication 1, **caractérisé en ce que** l'élément haut (2, 202) comprend au moins deux nervures de soudage se projetant vers l'extérieur (22, 222a, 222b, 222c) sur une certaine hauteur par rapport aux parois de soudage par fusion (21, 221), l'une de ces nervures de soudage (22, 222a, 222b, 222c) étant plus haute que la ou les autres nervures de soudage, par rapport aux parois de soudage par fusion (21, 221).

3. Récipient selon la revendication 2, **caractérisé en ce que** la nervure la plus haute (222a) se trouve la plus proche du fond de l'élément haut (2, 202).

4. Récipient selon l'une au moins des revendications précédentes, **caractérisé en ce que** l'encoche locale (231) présente une surface incurvée.

5. Récipient selon l'une au moins des revendications précédentes, **caractérisé en ce que**, juste au-dessus de l'élément de base (1), l'élément haut (2) comporte un rebord couvrant (23) dépassant à l'extérieur, qui protège le bord supérieur (51) de l'élément de base (1) tout en laissant libre l'extérieur de l'élément de base (1).

6. Récipient selon l'une au moins des revendications précédentes, **caractérisé en ce que** l'élément haut (2, 202) est fabriqué d'une seule pièce avec l'ouverture de distribution (24, 224).

7. Récipient selon l'une au moins des revendications précédentes, **caractérisé en ce que** l'élément haut (2, 202) est transparent.

8. Récipient selon l'une au moins des revendications précédentes, **caractérisé en ce que** le moyen de fermeture est un capuchon à vis (3).

9. Récipient selon l'une au moins des revendications précédentes, **caractérisé en ce que** le moyen de fermeture (3) est muni d'un dispositif de garantie d'inviolabilité, visible de l'extérieur.

10. Récipient selon l'une au moins des revendications précédentes, **caractérisé en ce que** l'on obtient le fond (6) en pliant l'élément de base (1).

11. Récipient selon l'une au moins des revendications 1 à 9, **caractérisé en ce que** le fond (6) est fabriqué à part.

12. Récipient selon l'une au moins des revendications précédentes, **caractérisé en ce que** la partie de l'élément haut (2, 202) qui dépasse de l'élément de base (1) présente sensiblement la forme d'un cylindre divisé sur la longueur par moitiés, s'étirant à l'horizontale et doté de parois latérales semi-circulaires.

13. Récipient selon l'une au moins des revendications 1 à 11, **caractérisé en ce que** la partie de l'élément haut (2, 202) qui dépasse au dessus de l'élément de base (1) présente sensiblement la forme d'une pyramide étêtée.

14. Récipient selon l'une au moins des revendications 1 à 11, **caractérisé en ce que** la partie de l'élément haut (2, 202) qui dépasse au dessus de l'élément de base (1) présente sensiblement la forme d'une demi-sphère.

15. Récipient selon l'une au moins des revendications 1 à 11, **caractérisé en ce que** la partie de l'élément haut (2, 202) qui dépasse au dessus de l'élément de base (1) présente sensiblement la forme d'un cône étêté.

16. Méthode de fabrication et de remplissage d'un récipient, comprenant les étapes suivantes :
- pliage d'un manchon (301) de section transversale sensiblement carrée à partir et découpé dans du carton, de sorte que le manchon (301) comprenne :
- une partie inférieure qui formera le corps du récipient,
- une partie supérieure (5) qui fera partie du haut pyramidal du récipient,
- une extrémité ouverte dans le fond,
- et une extrémité ouverte dans le haut,
- pousser partiellement le manchon (301) sur le mandrin (310), ce dernier comprenant :
- un corps de section transversale carrée,
- un haut présentant la forme d'une pyramide étêtée,
- la forme du mandrin (310) étant adaptée à la forme du récipient à fabriquer,
en poussant le manchon (301 par-dessus le mandrin (310) de telle sorte que la partie haute de ce dernier reste à l'extérieur de la partie supérieure du manchon (301) ;
- introduire une enclume de pré-rupture dans le manchon (301) en passant par son extrémité ouverte supérieure, l'enclume de pré-rupture étant munie d'une poche à chacun de ses quatre coins ;
- replier vers l'intérieur les quatre coins de la partie supérieure du manchon (301), de sorte qu'ils se logent dans les poches de l'enclume,
- retirer l'enclume de pré-rupture du manchon (301) en la ressortant de celui-ci par son extrémité ouverte supérieure ;
- pousser davantage le manchon (301) sur le mandrin (310), de telle sorte que la partie haute du mandrin (310) soit à l'intérieur de la partie supérieure du manchon (301) et, de préférence, de telle sorte que le mandrin (310) et le manchon (301) soient placés l'un par rapport à l'autre de manière à ce que la transition entre le corps et le haut du mandrin (310) rejoigne la transition entre la partie supérieure et la partie inférieure du manchon (301) ;
- introduire un élément haut préfabriqué (2, 202) dans le manchon (301) en passant par son extrémité ouverte supérieure, l'ouverture de distribution (24, 224) de l'élément haut (2, 202) étant fermée ;
- plier les coins de la partie supérieure du manchon (301) dans la direction sensiblement parallèle aux parois du manchon (301), de préférence de sorte que les parties repliées du manchon (301) se trouvent à l'intérieur de celui-ci ;
- étanchéifier la jonction entre les parois du manchon (301) et l'élément haut (2, 202) par ultra-sons ;
- retirer du mandrin (310) l'ensemble formé de l'élément haut (2, 202) et du manchon (301), ce dernier constituant désormais l'élément de base (1) du récipient ;
- placer l'ensemble de l'élément haut (2, 202) et l'élément de base (1) de manière à ce que l'élément haut (2, 202) soit plus bas que le fond ouvert de l'élément de base (1) ;
- remplir le récipient par le fond ouvert de l'élément de base (1) ;
- fermer le récipient en fermant le fond (6) ; le récipient est maintenant rempli et fermé.

17. Méthode selon la revendication 16, **caractérisée en ce que** l'on ferme l'élément haut (2, 202) en lui appliquant un capuchon à vis (3).

18. Méthode selon l'une au moins des revendications 16 ou 17, **caractérisée en ce que** l'on ferme le fond en repliant et en assemblant ensuite les parties de l'élément de base (1).

19. Méthode selon l'une au moins des revendications 16 ou 17, **caractérisée en ce que** l'on ferme le fond en appliquant un élément de fond.

20. Méthode selon l'une au moins des revendications 16 à 19, **caractérisée en ce que** l'élément haut (2, 202) est fabriqué par moulage par injection.

21. Méthode selon l'une au moins des revendications 16 à 19, **caractérisée en ce que** l'élément haut (2, 202) est formé par soufflage.

22. Méthode selon l'une au moins des revendications 16 à 21, dans laquelle la configuration du récipient est conforme à l'une au moins des revendications 1 à 15.
